# EUROPEAN PATENT SPECIFICATION

(11) **EP 2 099 888 B1**
(45) Date of publication and mention of the grant of the patent: **25.09.2013**
(21) Application number: 07849381.4
(22) Date of filing: 07.12.2007
(51) Int. Cl.: C11C 1/08, C11C 1/10, C11C 3/02

(54) **RECONSTITUTION OF TRIGLYCERIDES FOR USE AS FUEL IN DIESEL ENGINES**
REKONSTITUTION VON TRIGLYCERIDEN ZUR VERWENDUNG ALS KRAFTSTOFF IN DIESELMOTOREN
RECONSTITUTION DE TRIGLYCÉRIDES POUR UNE UTILISATION COMME CARBURANT DANS DES MOTEURS DIESEL

(30) Priority: 28.11.2007 EP 07121773
(43) Date of publication of application: 16.09.2009
(73) Proprietor: A&A F.lli Parodi SpA, 16014 Campomorone (GE) (IT)
(72) Inventor: PARODI, Augusto, I-16167 Genova (IT); MARINI, Leandro, I-16014 Ceranesi (GE) (IT)
(74) Representative: Gervasi, Gemma
(86) International application number: PCT/IB2007/054974
(87) International publication number: WO 2009/068940

(56) References cited:
- WO-A-2005/019153
- GB-A- 978 085
- US-A- 1 758 634
- US-A- 4 366 100
- US-A- 5 169 670

## Description

### Field of the invention

The present invention relates to a process for the reconstitution of triglycerides, chemically identical to their natural form, from waste produced by the refining of vegetable oils and glycerin generated during the manufacture of biodiesel. In particular, the process is best used in recovery of the oleins deriving from refining for the production of electricity.

### State of the art

Considering the growing interest in biofuels, in the near future there is the risk that the supply of vegetable oils will not be able to meet the increasing demand.

According to the normative of the European Community, the production of biodiesel should increase more than proportionally with respect to introduction of non-renewable fuels onto the market. The current law establishes that the percentage of biofuels or other renewable fuels used in transport must be 1% by December 2005 (objective never achieved), 2.5% by 31st December 2008, 5.75% by 31st December 2010 and 20% in 2020.

Parallel to this, there is a strong increase in the demand for vegetable oil as one of the most interesting renewable sources for the production of electricity and heat according to the normative provisions of the European Community (Directive 2001/77/CE on the promotion of electricity produced from renewable energy sources).

Up to today, in Italy alone, out of a total of 64 biomass plants (equivalent to a power of 1481 MW) qualified by the Grtn (manager of the national grid) during 2006, 23 ran on liquid biofuel (equivalent to a power of 160 MW).

Interest in liquid biofuels is a recent development but is currently growing faster than interest in other biofuels due to the simplicity in terms of logistics and management of the renewable source with respect to solid waste or biomasses.

The only limit to the growth of these plants, at least at national level, is represented by the difficulty of locating the raw material. The growing production of biodiesel determines a growing production of glycerin (1,2,3-propanetriol). The latter is the co-product with the greatest economic impact in the modem oil and chemical industry. The glycerol is obtained from hydrolytic cracking, under pressure, of triglycerides (production of fatty acids), from transesterification of triglycerides to methyl esters (biodiesel) and from saponification of glycerides with alkalis (soap-making).

Following the introduction of biodiesel as an alternative fuel for engines and for heating, a big increase has been recorded in the related production and therefore availability of glycerin (approximately 1.5 million tons per year). Although the growth in the biofuel market is constant and unstoppable, the same cannot be said for glycerin. Consumption of glycerol has remained stable and, in the opinion of the experts, will not increase unless alternative market outlets are found in the future. Attention should therefore be focused on how to utilise a product like glycerin coming from the vegetable oils used in the production of biodiesel.

A further aspect to be taken into consideration is the growing production of acid oils (oleins), the actual destination of which is not known, from the refining of vegetable oils. Oleins are represented by a mixture of fatty acids (oleic acid, palmitic acid, linoleic acid etc.) and vegetable oils deriving from chemical refining (soapy pastes) and physical refining (deacidification with stripping) of vegetable oils. The production of oleins depends on the vegetable oil and its acidity. In particular, the oleins consist not only of fatty acids but also fractions of tri-, di- and monoglycerides, via which the oil loses an extra 25% acidity in weight, on average, in respect of the original value. For example, in optimal conditions, an oil with 2% acidity loses 2.5-3% in oleins. Document GB978085 relates to the conversion of tall oil fatty acids into an edible triglyceride oil, while US patent 5,169,670 discloses a low saturated frying oil made by esterification of glycerin with an unsaturated fraction of animal fat.

### Disclosure of the invention

The subject of the present invention is the production of a simple convenient method for the reconstitution of triglycerides from oleins and glycerin, renewable vegetable sources easily located and continuously increasing in terms of supply, which guarantees a good yield and simultaneously limits the production of by-products harmful to the operator and the environment. The present invention therefore describes a process for the production of triglycerides from by-products of chemical and physical refining of vegetable and/or animal oils, oils and fatty acids no longer usable for producing refined oils, fatty acids from distillation and other processes, hydrolytically cracked fatty substances and distilled and non-distilled fatty acids from the cracking of soaps.

Vegetable oils are generally obtained by extraction from seeds, by means of solvent or pressure, while animal fats are obtained by hot extraction in autoclaves or by means of solvent. Normally these fatty substances contain free fatty acids, sterols, phospholipids, water, odorous substances and other impurities. Refining of the fatty substances involves complete removal of all the impurities including the free fatty acids so that they can be used in the production of biodiesel, in food and in industry in general.

Hence the intention to develop a process of direct esterification with glycerol of fatty acid substances with neutralisation number (nn) between 2 and 300.

### Detailed disclosure of the present invention

The object of the present invention is achieved by means of a process for the production of triglycerides for use as fuel in diesel engines, the triglycerides being obtained from:
- by-products of chemical and physical refining of vegetable and/or animal oils,
- oils and fatty acids no longer usable for producing refined oils,
- fatty acids from distillation and other processes,
- hydrolytically cracked fatty substances
- distilled and non-distilled fatty acids from the cracking of soaps,
wherein the process consists in the direct esterification with glycerol of fatty acid substances having a neutralisation number (nn) between 2 and 300, comprising the following phases:
(a) reaction of the initial fatty substance with a quantity of glycerol between 0.7 and 20 times the stoichiometric quantity necessary calculated from the neutralisation number of the fatty substance used, to obtain glyceric ester with nn between 0 and 30;
(b) a refining process for the removal of sodium and potassium soaps, said refining process comprising the following successive phases:
   - stripping of the ester obtained with water vapour;
   - addition of a strong mineral acid to the oil thus obtained;
   - treatment of the oil with organic carbonates;
   - filtering of the oil.

According to the method of the present invention, a fatty acid substance coming from chemical and/or physical deacidification or a combination of the two, or from distillation of the fatty substances deriving from chemical or physical deacidification or a combination of the above 2 components in any percentage, or from the refining of glycerin, in which an acid fraction due to the cracked soaps and a neutral part which comprises methyl esters, mono-, di-, and tri-glycerides with nn between 2 and 300 co-exist, is placed in a reactor, quantified in weight and, with the addition of glycerol in a quantity of between 0.7 and 20 times the stoichiometric quantity necessary calculated from the neutralisation number of the fatty substance used, is made to react to obtain a glyceric ester with nn between 0 and 30. The esterification is carried out with development of water and subsequent condensation; the concentration of the catalyst used is between 0 and 5% by weight of the total of the substances used.

A strong acid is added to the product to eliminate the presence, even minimum, of sodium and potassium soaps not otherwise separable by means of filtering.

**Table A_ Treatment with strong acids**

| Soaps (NGD C8) (ppm) | H₂SO₄ 96% (%) | Initial acidity NGD C10 (mgKOH/g) | Final acidity NGD C10 (mgKOH/g) |
|---|---|---|---|
| 10000 | 0.16 theoretical | 0.4 | 2.85 (a) |
| | 0.2 actual | | |
| 5000 | 0.08 theoretical | 0.4 | 1.62 (b) |
| | 0.1 actual | | |

| | | | |
|---|---|---|---|
| (a) 2.85= 2.4 (organic ac) + 0.45 (inorganic ac) (b) 1.62= 1.4 (organic ac) + 0.22 (inorganic ac) | | | |

The system releases fatty acid but salifies to sodium and potassium sulphates the two metalloids which can be subsequently retained by the filtering.

The carbonates subsequently used are added in the form of powder in order to avoid the risk, albeit minimum, of Na, K and Ca binding with fatty acids to form new soaps.

**Table B: treatment with free alkalis**

| Initial acidity (NGD C10) | Mineral acidity (NGD C11) | Na₂CO₃ (%) | K₂CO₃ (%) | CaCO₃ (%) | Final acidity (NGD C10) | Final mineral acidity (NGD C11) |
|---|---|---|---|---|---|---|
| 2.85 | 0.45 | 0.042 | 0.055 | 0.040 | 2.4 | // |
| 1.62 | 0.22 | 0.021 | 0.027 | 0.02 | 1.4 | // |
| | | | | | | |

The catalysts can be acid or basic, solid or liquid, such as tin and its salts, zinc and its salts, titanium and its salts and esters or sulphuric, p-toluenesulphonic, methanesulphuric or phosphoric acid also supported on resins, zeolite and similar. With the present process it is also possible to work without any catalysts.

The advantages of the present invention are that the process provides for esterification of the acidity present in the fatty substances by means of glycerin with the exclusion of methyl alcohol, ethanol, propanol, butanol and other alcohols and polyalcohols; it does not require purification of the original fatty substance; the oleins are a strictly renewable vegetable product like glycerin; the present method permits the elimination of volatile products by means of vapour stripping and also the elimination of ash and organic substances in suspension.

**Table C: Filtering**

| Initial ash NGD C9 (%) | Initial soaps NGD C8 (ppm) | Total ash after filtering NGD C9 (%) | Sulphur after filtering ISO 20846 (ppm) | Soaps after filtering NGD C8 (ppm) |
|---|---|---|---|---|
| 1.3 | 20 | 0.01 | 1 | // |
| 0.79 | 15 | 0.015 | 2 | // |

### Examples of embodiment of the invention

### Example 1

1000 g of fatty acid substance coming from the refining of colza oil with acidity of 120 mg KOH/g, 66 g of glycerol and 4.26 g of 2-ethylhexyltitanate are placed in an SS316 stirred reactor and heated. The reaction begins at 130°C and terminates at 230°C in 8 hours. The absolute pressure up to the sixth hour is 1 bar, in the last 2 hours the absolute pressure is a residual 5-10 mbar and the final acidity of the triglyceride is 0.5 mg KOH/g. The temperature is brought to 200°C and the reactor is kept under vacuum; dry saturated vapour is injected through a nozzle positioned in the lower part.

In this way the oil is stripped and the volatile fractions such as water, odorous substances and other volatile products are removed. The operation terminates with disappearance of the post-exchanger condensate.

The oil thus reconstituted is cooled to a temperature of between 20 and 100°C and strong mineral acid is added in quantities of between 0.001 and 1% and concentrations between 1 and 100%.

Carbonates such as Na₂CO₃/K₂CO₃/CaCO₃ are added to the oil in order to salify any excess mineral acidity; it is then placed in a vacuum with the addition of a fraction of synthetic siliceous earth or filtering adjuvants and filtered with continuous and/or discontinuous filters to obtain an ash content below 0.01% of the mass, carbon residues below 0.1 of the mass and a water content up to 200 ppm.

### Example 2

1000 g of fatty acid substance coming from the refining of sunflower oil with acidity of 120 mg KOH/g, 66 g of glycerol and 4.26 g of 2-ethylhexyltitanate are placed in an SS316 stirred reactor and heated. The reaction begins at 130°C and terminates at 230°C in 8 hours. The absolute pressure up to the sixth hour is 1 bar, in the last 2 hours the absolute pressure is a residual 5-10 mbar and the final acidity of the triglyceride is 0.5 mg KOH/g.

The temperature is brought to 200°C and the reactor is kept in a vacuum; dry saturated vapour is injected through a nozzle positioned in the lower part.

In this way the oil is stripped and the volatile fractions such as water, odorous substances and other volatile products are removed. The operation terminates with disappearance of the post-exchanger condensate.

The oil thus reconstituted is cooled to a temperature of between 20 and 100°C and strong mineral acid is added in quantities of between 0.001 and 1% and concentrations between 1 and 100%.

Carbonates such as Na₂CO₃/K₂CO₃/CaCO₃ are added to the oil in order to salify any excess mineral acidity; it is then placed in a vacuum with the addition of a fraction of synthetic siliceous earth or filtering adjuvants and filtered with continuous and/or discontinuous filters to obtain an ash content below 0.01% of the mass, carbon residues below 0.1 of the mass and a water content up to 200 ppm.

### Example 3

1000 g of fatty acid substance coming from the refining of almond oil with acidity of 120 mg KOH/g, 66 g of glycerol and 4.26 g of 2-ethylhexyltitanate are placed in an SS316 stirred reactor and heated. The reaction begins at 130°C and terminates at 230°C in 8 hours. The absolute pressure up to the sixth hour is 1 bar, in the last 2 hours the absolute pressure is a residual 5-10 mbar and the final acidity of the triglyceride is 0.5 mg KOH/g.

The temperature is brought to 200°C and the reactor is kept in a vacuum; dry saturated vapour is injected through a nozzle positioned in the lower part.

In this way the oil is stripped and the volatile fractions such as water, odorous substances and other volatile products are removed. The operation terminates with disappearance of the post-exchanger condensate.

The oil thus reconstituted is cooled to a temperature of between 20 and 100°C and strong mineral acid is added in quantities of between 0.001 and 1% and concentrations between 1 and 100%.

Carbonates such as Na₂CO₃/K₂CO₃/CaCO₃ are added to the oil in order to salify any excess mineral acidity; it is then placed in a vacuum with the addition of a fraction of synthetic siliceous earth or filtering adjuvants and filtered with continuous and/or discontinuous filters to obtain an ash content below 0.01% of the mass, carbon residues below 0.1 of the mass and a water content up to 200 ppm.

### Example 4

1000 g of fatty acid substance coming from the refining of glycerol from biodiesel with acidity of 40 mg KOH/g, 30 g of glycerol and 1.03 g of tin chloride are placed in an SS316 stirred reactor and heated. The reaction begins at 130°C and terminates at 230°C in 8 hours at absolute pressure. The absolute pressure up to the sixth hour is 1 bar, in the last 2 hours the absolute pressure is a residual 1-5 mbar and the final acidity of the triglyceride is 0.1 mg KOH/g.

The temperature is brought to 200°C and the reactor is kept in a vacuum; dry saturated vapour is injected through a nozzle positioned in the lower part.

In this way the oil is stripped and the volatile fractions such as water, odorous substances and other volatile products are removed. The operation terminates with disappearance of the post-exchanger condensate.

The oil thus reconstituted is cooled to a temperature of between 20 and 100°C and strong mineral acid is added in quantities of between 0.001 and 1% and concentrations between 1 and 100%.

Carbonates such as Na₂CO₃/K₂CO₃/CaCO₃ are added to the oil in order to salify any excess mineral acidity; it is then placed in a vacuum with the addition of a fraction of synthetic siliceous earth or filtering adjuvants and filtered with continuous and/or discontinuous filters to obtain an ash content below 0.01 % of the mass, carbon residues below 0.1 of the mass and a water content up to 200 ppm.

## Claims

1. Process for the production of triglycerides for use as fuel in diesel engines, the triglycerides being obtained from:
- by-products of chemical and physical refining of vegetable and/or animal oils,
- oils and fatty acids no longer usable for producing refined oils,
- fatty acids from distillation and other processes,
- hydrolytically cracked fatty substances
- distilled and non-distilled fatty acids from the cracking of soaps,
wherein the process consists in the direct esterification with glycerol of fatty acid substances having a neutralisation number (nn) between 2 and 300, comprising the following phases:
(a) reaction of the initial fatty substance with a quantity of glycerol between 0.7 and 20 times the stoichiometric quantity necessary calculated from the neutralisation number of the fatty substance used, to obtain glyceric ester with nn between 0 and 30;
(b) a refining process for the removal of sodium and potassium soaps, said refining process comprising the following successive phases:
- stripping of the ester obtained with water vapour;
- addition of a strong mineral acid to the oil thus obtained;
- treatment of the oil with organic carbonates;
- filtering of the oil.

2. Process as claimed in claim 1,
wherein the concentration of the catalyst used is between 0 and 5% by weight of the total of the substances used.

3. Process as claimed in one of the preceding claims,
wherein the original fatty acid substances are derived from chemical and/or physical deacidification or a combination of the two, or from distillation of the fatty substances deriving from the chemical and/or physical deacidification or a combination of the above 2 components in any percentage, or from the refining of glycerin in which an acid fraction due to the cracked soaps and a neutral part which comprises methyl esters, mono-, di-, and tri-glycerides, or oils and fatty acids that can no longer be used to produce refined oils, co-exist.

4. Process as claimed in claim 3,
wherein said fatty acid substances are oleins.

5. Process as claimed in one of the preceding claims,
wherein the catalysts used can be acid or basic, solid or liquid such as tin and its salts, zinc and its salts, titanium and its salts and esters or sulphuric, p-toluenesulphonic, methanesulphuric or phosphoric acid.

6. Process as claimed in claim 5,
wherein the catalysts are supported on a resin, a zeolite or similar substrate.

7. Process as claimed in one of the preceding claims,
wherein the fatty acid substances to be treated have an initial acidity between 2 and 300 mg KOH/g, while at the end of the reaction the acidity is between 0.1 and 0.5 mg KOH/g.

8. Process as claimed in one of the preceding claims,
wherein the reaction begins at a temperature between 110 and 150°C and terminates at a temperature between 210 and 250°C in 8 hours, and wherein the absolute pressure up to the sixth hour is 1 bar, while in the last 2 hours the absolute pressure is a residual 5-10 mbar.

9. Process as claimed in one of the preceding claims,
wherein the temperature is brought to 200°C and the reactor is kept under vacuum.

10. Process as claimed in one of the preceding claims,
wherein the stripping of the ester thus obtained permits the removal of volatile fractions such as water, odorous substances and other volatile products.

11. Process as claimed in one of the preceding claims,
wherein in the refining phase the strong mineral acid is added in a quantity between 0.001 and 1% and concentrations between 1 and 100% after cooling of the oil to a temperature between 20 and 100°C.

12. Process as claimed in one of the preceding claims,
wherein the carbonates added to the oil in the refining phase are chosen from Na₂CO₃, K₂CO₃ or CaCO₃ in the solid state,

13. Process as claimed in one of the preceding claims,
wherein in the final filtering phase a fraction of synthetic siliceous earth or another filtering adjuvant is added to the oil; it is then filtered with a continuous and/or discontinuous filter to obtain an ash content below 0.01 % of the mass, carbon residues below 0.1 of the mass and a water content up to 200 ppm.

## Patentansprüche

1. Verfahren zur Herstellung von Triglyceriden für die Verwendung als Brennstoff in Dieselmaschinen, wobei die Triglyceride erhalten werden aus:
- Nebenprodukten der chemischen oder physikalischen Raffination von Pflanzen- und/oder tierischen Ölen,
- Ölen und Fettsäuren, die nicht länger zur Herstellung von raffinierten Ölen nutzbar sind,
- Fettsäuren aus Destillationen und anderen Prozessen,
- hydrolytisch gecrackten Fettstoffen,
- destillierten und undestillierten Fettsäuren aus dem Cracken von Seifen,
wobei das Verfahren in der direkten Veresterung von Fettsäuresubstanzen mit einer Neutralisationszahl (NZ) zwischen 2 und 300 mit Glycerin besteht und die folgenden Phasen umfasst:
(a) Reaktion des anfänglichen Fettstoffs mit einer Glycerinmenge zwischen dem 0,7-und 20-fachen der stöchiometrisch notwendigen Menge, die sich aus der Neutralisationszahl des verwendeten Fettstoffs berechnet, um einen Glycerinester mit NZ zwischen 0 und 30 zu erhalten;
(b) Raffinationsprozess zur Entfernung von Natrium- und Kaliumseifen, wobei der Prozess folgende aufeinanderfolgenden Phasen umfasst:
- Stripping des erhaltenen Esters mit Wasserdampf;
- Zugabe einer starken Mineralsäure zum so erhaltenen Öl;
- Behandlung des Öls mit organischen Carbonaten;
- Filtration des Öls.

2. Verfahren gemäß Anspruch 1,
wobei die Konzentration des verwendeten Katalysators zwischen 0 und 5 Gew.-% des Gesamtgewichts der verwendeten Substanzen beträgt.

3. Verfahren gemäß einem der vorhergehenden Ansprüche;
wobei die ursprünglichen Fettsäuresubstanzen aus einer chemischen und/oder physikalischen Entsäuerung oder einer Kombination der beiden, oder aus der Destillation von Fettstoffen, die aus der chemischen und/oder physikalischen Entsäuerung oder einer Kombination der obigen beiden Komponenten in jeglichem Anteil stammen, oder aus der Raffination von Glycerin stammen, bei der eine aus den gecrackten Seifen resultierende Säurefraktion und ein neutraler Teil gemeinsam vorkommen, der Methylester, Mono-, Di- und Trigylceride oder Öle und Fettsäuren umfasst, die nicht länger zur Produktion von raffinierten Ölen verwendet werden können.

4. Verfahren gemäß Anspruch 3,
wobei genannte Fettsäuresubstanzen Oleine sind.

5. Verfahren gemäß einem der vorhergehenden Ansprüche,
wobei die verwendeten Katalysatoren sauer oder basisch, fest oder flüssig sein können, wie z. B. Zinn und seine Salze, Zink und seine Salze, Titan und seine Salze und Ester oder Schwefel-, p-Toluolsulfon-, Methansulfon- oder Phosphorsäure.

6. Verfahren gemäß Anspruch 5,
wobei die Katalysatoren auf einem Harz, einem Zeolith oder einem gleichartigen Substrat geträgert sind.

7. Verfahren gemäß einem der vorhergehenden Ansprüche,
wobei die zu behandelnden Fettsäuresubstanzen eine anfängliche Acidität zwischen 2 und 300 mg KOH/g aufweisen, während die Acidität am Ende der Reaktion zwischen 0,1 und 0,5 mg KOH/g liegt.

8. Verfahren gemäß einem der vorhergehenden Ansprüche,
wobei die Reaktion bei einer Temperatur zwischen 110 und 150 °C beginnt und in 8 Stunden bei einer Temperatur zwischen 210 und 250 °C endet, und wobei der absolute Druck bis zur sechsten Stunde 1 bar beträgt, während der absolute Druck in den letzten 2 Stunden restliche 5-10 mbar beträgt.

9. Verfahren gemäß einem der vorhergehenden Ansprüche,
wobei die Temperatur auf 200 °C gebracht wird und der Reaktor unter Vakuum gehalten wird.

10. Verfahren gemäß einem der vorhergehenden Ansprüche,
wobei das Stripping des so erhaltenen Esters die Entfernung von flüchtigen Fraktionen wie z. B. Wasser, riechenden Substanzen und anderen flüchtigen Produkten erlaubt.

11. Verfahren gemäß einem der vorhergehenden Ansprüche,
wobei in der Raffinationsphase die starke Mineralsäure in einer Menge zwischen 0,001 und 1 % und in Konzentrationen zwischen 1 und 100 % zugegeben wird, nachdem das Öl auf eine Temperatur zwischen 20 und 100 °C gekühlt wurde.

12. Verfahren gemäß einem der vorhergehenden Ansprüche,
wobei die zu dem Öl während der Raffinationsphase gegebenen Carbonate aus Na₂CO₃, K₂CO₃ ode CaCO₃ in fester Phase ausgewählt werden.

13. Verfahren gemäß einem der vorhergehenden Ansprüche,
wobei in der finalen Filtrationsphase eine Fraktion aus synthetischer Kieselerde oder einem anderen Filtrationshilfsmittel zu dem Öl gegeben wird; dann mit einem kontinuierlichen und/oder diskontinuierlichen Filter filtriert wird, um einen Aschegehalt von weniger als 0,01 Massen-%, Kohlenstoffrückstände von weniger als 0,1 Massen-% und einen Wassergehalt von bis zu 200 ppm zu erhalten.

## Revendications

1. Procédé de production de triglycérides destinés à une utilisation comme carburant dans des moteurs diesel, les triglycérides étant obtenus à partir :
- de sous-produits du raffinage chimique et physique d'huiles végétales et/ou animales,
- d'huiles et d'acides gras qui ne sont plus utilisables pour produire des huiles raffinées,
- d'acides gras provenant d'une distillation et d'autres procédés,
- de substances grasses brisées par voie hydrolytique,
- d'acides gras distillés et non distillés provenant du bris de savons,
dans lequel le procédé est constitué de l'estérification directe avec du glycérol de substances de type acide gras ayant un indice de neutralisation (nn) compris entre 2 et 300, comprenant les phases suivantes :
(a) la réaction de la substance de type acide gras initiale avec une quantité de glycérol comprise entre 0,7 et 20 fois la quantité stoechiométrique nécessaire calculée à partir de l'indice de neutralisation de la substance grasse utilisée, pour obtenir un ester glycérique ayant un nn compris entre 0 et 30 ;
(b) un procédé de raffinage pour l'élimination des savons de sodium et potassium, le procédé comprenant les phases successives suivantes :
- le décapage de l'ester obtenu avec de la vapeur d'eau ;
- l'addition d'un acide minéral fort à l'huile ainsi obtenue ;
- le traitement de l'huile avec des carbonates organiques ;
- la filtration de l'huile.

2. Procédé selon la revendication 1,
dans lequel la concentration du catalyseur utilisé est comprise entre 0 et 5 % en poids du total des substances utilisées.

3. Procédé selon l'une quelconque des revendications précédentes,
dans lequel les substances de type acide gras d'origine dérivent d'une désacidification chimique et/ou physique ou d'une combinaison des deux, ou d'une distillation des substances grasses dérivées de la désacidification chimique et/ou physique, ou d'une combinaison des 2 composants ci-dessus en un quelconque pourcentage ou du raffinage de glycérine dans lequel une fraction acide issue des savons brisés et d'une partie naturelle qui comprend des esters méthyliques, des mono-, di- et tri-glycérides ou des huiles et des acides gras qui ne peuvent plus être utilisés pour produire des huiles raffinées, coexistent.

4. Procédé selon la revendication 3,
dans lequel lesdites substances de type acide gras sont des oléines.

5. Procédé selon l'une quelconque des revendications précédentes,
dans lequel les catalyseurs utilisés peuvent être acides ou basiques, solides ou liquides tels que l'étain et ses sels, le zinc et ses sels, le titane et ses sels et des esters ou l'acide sulfurique, p-toluènesulfonique, méthanesulfurique ou phosphorique.

6. Procédé selon la revendication 5,
dans lequel les catalyseurs sont supportés sur une résine, une zéolite ou un substrat similaire.

7. Procédé selon l'une quelconque des revendications précédentes,
dans lequel les substances de type acide gras à traiter ont une acidité initiale comprise entre 2 et 300 mg de KOH/g alors qu'à la fin de la réaction, l'acidité est comprise entre 0,1 et 0,5 mg de KOH/g.

8. Procédé selon l'une quelconque des revendications précédentes,
dans lequel la réaction commence à une température comprise entre 110 et 150°C et s'achève à une température comprise entre 210 et 250°C en 8 heures et dans lequel la pression absolue jusqu'à la sixième heure est de 1 bar, alors qu'au cours des 2 dernières heures, la pression absolue résiduelle est de 5 à 10 mbars.

9. Procédé selon l'une quelconque des revendications précédentes,
dans lequel la température est amenée à 200°C et le réacteur est maintenu sous vide.

10. Procédé selon l'une quelconque des revendications précédentes,
dans lequel le décapage de l'ester ainsi obtenu permet l'élimination des fractions volatiles telles que l'eau, les substances odorantes et d'autres produits volatils.

11. Procédé selon l'une quelconque des revendications précédentes,
dans lequel dans la phase de raffinage, l'acide minéral fort est ajouté en une quantité comprise entre 0,001 et 1 % et en des concentrations comprises entre 1 et 100 % après refroidissement de l'huile à une température comprise entre 20 et 100°C.

12. Procédé selon l'une quelconque des revendications précédentes,
dans lequel les carbonates ajoutés à l'huile dans la phase de raffinage sont choisis parmi Na₂CO₃, K₂CO₃ ou CaCO₃ à l'état solide.

13. Procédé selon l'une quelconque des revendications précédentes,
dans lequel dans la phase de filtration finale, une fraction de terre siliceuse synthétique ou d'un autre adjuvant de filtration est ajoutée à l'huile ; elle est ensuite filtrée sur un filtre continu et/ou discontinu pour donner une teneur en cendres inférieure à 0,01 % de la masse, des résidus carbonés inférieurs à 0,1 de la masse et une teneur en eau allant jusqu'à 200 ppm.
